# EUROPEAN PATENT SPECIFICATION

(11) **EP 3 566 028 B1**
(45) Date of publication and mention of the grant of the patent: **07.06.2023**
(21) Application number: 18830709.4
(22) Date of filing: 11.11.2018
(51) Int. Cl.: G01F 23/00, G01F 23/38, F16B 5/12, F16B 1/02, F16B 21/09, F16B 1/00

(54) **LIQUID LEVEL GAUGE WITH REMOVABLE INDICATOR ASSEMBLY**
FLÜSSIGKEITSPEGELMESSER MIT ABNEHMBARER ANZEIGEANORDNUNG
JAUGE DE NIVEAU DE LIQUIDE AVEC ENSEMBLE INDICATEUR AMOVIBLE

(30) Priority: 23.03.2018 US 201815934049
(43) Date of publication of application: 13.11.2019
(73) Proprietor: Rochester Sensors, LLC, Dallas, TX 75229 (US)
(72) Inventor: LEASE, Benjamin, Flower Mound. Texas 75022 (US); ROSS, Herbert G.,Jr, Argyle, Texas 76226 (US); HRNCIR, Robert, Irving, Texas 75060 (US)
(74) Representative: Dehns
(86) International application number: PCT/US2018/060231
(87) International publication number: WO 2019/182651

(56) References cited:
- EP-A2- 2 590 273
- CN-A- 103 168 193
- US-A- 4 688 028
- US-A- 6 089 086
- US-A1- 2003 084 720
- US-A1- 2004 212 468
- US-A1- 2006 032 305
- US-A1- 2012 007 803
- US-B2- 6 564 632
- US-B2- 7 079 037
- Rochester Gauges, Inc: "Rochester Remote Ready Dial & Hall Effect Module", , 10 March 2015 (2015-03-10), XP055461134, Retrieved from the Internet: URL:http://www.rochestergauges.com/pdfs/R3 D.pdf [retrieved on 2018-03-20]
- tankqcom: "Remote Ready Dial Installation", Youtube, 23 January 2012 (2012-01-23), page 1 pp., XP054980218, Retrieved from the Internet: URL:https://www.youtube.com/watch?v=XeCpli bHX_8 [retrieved on 2020-02-14]

## Description

### BACKGROUND OF THE INVENTION

This invention relates to monitoring liquid level in tanks, and more particularly to a system for manually determining and electronically indicating a liquid level condition within a tank.

The determination of liquid level, such as the level of liquefied petroleum (LP) gas, propane, butane, and so on, in transportable and stationary storage tanks is often inconvenient for vehicle operators, will-call status customers and others where a mechanical gauge head and sending unit are installed in the tank. Such customers must visually read the gauge head to determine the liquid level condition of the tank, then call a fuel supply company for tank refill. For some portable tanks, such as those used to power forklifts, generators, and other equipment, the operator is usually not in a position to constantly monitor the fuel level since the gauge head is out of the operator's view. Accordingly, the equipment can run out of fuel at a location remote from the replacement tank, causing equipment downtime and loss of revenue, power, and other conditions until the empty tank can be replaced.

For stationary tanks, located at a place of residence or business for example, a person must exit the building, approach the tank and move a protective cover located over the gauge head and other fittings in order to ascertain whether or not a fuel supply company should be contacted for refilling the tank. Consequently, many stationary tanks also run out of fuel at the most inconvenient times, such as during heating, cooking, bathing, and so on. However, such inconveniences can potentially lead to more serious consequences, such as frozen pipes during winter conditions and the attendant damage and repair costs, health degradation when exposed to low temperature conditions, and so on. The difficulty in ascertaining fuel level within the tank is exacerbated when access to the gauge head is not possible for numerous reasons, such as the location of the gauge head, physical limitations of the user, and so on.

Portable and permanently installed storage tanks for pressurized fuel and other liquids, such as liquefied petroleum gas (LPG), propane, butane, and so on, typically include a fuel sending unit mounted at the center or end of the tank for view by an observer. The sending unit typically includes a float that rides on the surface of the liquid. The float is connected to a pivoting float arm which is in turn connected to the lower end of a driven shaft that rotates about its axis in response to float movement. A drive magnet is typically located at the upper end of the driven shaft that magnetically couples with a driven magnet inside the gauge head, which is associated with an indicator and gauge plate with scale markings thereon, so that rotational movement of the drive magnet in response to float movement induces the driven magnet to rotate a proportional amount and rotate the indicator across the scale, to thereby display a liquid level condition of the tank to an observer. One such device for determining liquid level within LPG or fuel oil tanks is disclosed in U.S. Patent No. 6,041,650 to Swindler, et al.*,* and includes a sensing probe having a movable float arm coupled by gears to the lower end of a rotatable drive shaft. A magnet is mounted to the upper end of the shaft and extends into a passage of a gauge head for magnetic coupling with a level indicating dial. A change in liquid level within the tank causes movement of the float arm and thus rotation of the indicating dial with respect to a stationary gauge plate with liquid level indicia printed thereon, to thereby show the amount of liquid within the tank. These types of liquid level gauges must be manually accessed and visually observed to determine the position of the indicating dial with respect to the gauge plate, and is often inconvenient to do so, as discussed above.

In order to facilitate the reading of liquid level, and due to the number of portable and stationary tanks with pre-existing sending units having a magnet at the top of a rotatable drive shaft inside the tank, a liquid level gauge, which allows both manual and electronic determination of the liquid level within the tank, is disclosed in U.S. Patent No. 6,564,632 to Ross, Jr.

This patent discloses a gauge head for mounting to a tank and a dial assembly for mounting to the gauge head. The dial assembly includes a base, which is in turn connected to the gauge head. A magnetically-driven indicating dial, or pointer magnet, is rotatably mounted on the base above a stationary gauge plate also mounted on the base. The gauge plate includes scale indicia around its periphery relating to liquid level in the tank. The relative position of the magnetically-driven indicating dial and the gauge plate can be viewed by a user for manually determining liquid level within the tank. This gauge also enables electronic determination of the liquid level by the provision of a circular pointer magnet with a variable thickness. The pointer magnet rotates in response to the rotation of one or more tank magnets, as disclosed in the Swindler, *et al.* patent referenced above. The variable thickness of the pointer magnet creates a linearly variable magnetic flux around the periphery of the magnet. A transparent lens or cover is connected to the base for enclosing and protecting the components of the dial assembly. The transparent nature of the cover allows a user to view the indicating dial and gauge plate to visually ascertain the liquid level. A channel is formed in the cover for receiving a removable magnetic detector with a single Hall-effect sensor. The channel is located at a position to ensure that the pointer magnet and the gauge plate with liquid level indicia are not obfuscated, thereby allowing the simultaneous visual observation of the liquid level and electronic determination thereof by electronically sensing a change in the magnetic flux of the pointer magnet, and thus its angular position with respect to the magnetic detector. The angular position of the pointer magnet is indicative of liquid level in the tank. The electronic signal produced by the magnetic detector can be sent to a remote location for viewing by a user or further processing, notifying a distributor of LPG or the like of the liquid level condition within the tank for scheduling delivery of LPG, and so on.

Although the above-described system is adequate for manually and electronically indicating liquid level, the specially shaped pointer magnet with variable thickness is a specialty item that is relatively expensive to manufacture when compared to ordinary magnets, requires calibration, and thus increases manufacturing time and costs, thereby increasing the overall cost of the gauge head.

It would therefore be desirous to overcome one or more disadvantages of liquid level gauges associated with storage tanks as discussed above.

Indicator assemblies are known from Rochester Gauges ,Inc: "Rochester Remote Ready Dial & Hall Effect Module", 10 March 2015; Tankqcom: "Remote Ready Dial Installation", YouTube, 23 January 2012; and US 2004/0212468 A1.

### BRIEF SUMMARY OF THE INVENTION

According to the invention, an indicator assembly as defined in claim 1 is provided.

### BRIEF DESCRIPTION OF THE DRAWINGS

The foregoing summary as well as the following detailed description of the preferred embodiments of the present invention will be best understood when considered in conjunction with the accompanying drawings, wherein like designations denote like elements throughout the drawings, and wherein:
FIG. 1 is a schematic side view of a of a liquid level gauge in accordance with an exemplary embodiment of the invention connected to a tank for both visually displaying and electronically determining a liquid level condition within the tank;
FIG. 2 is a rear isometric view of a dial assembly and connected sensor module that forms part of the liquid level gauge in accordance with the invention;
FIG. 3 is a rear isometric view of the dial assembly of FIG. 2 showing removal and installation of the sensor module;
FIG. 4 is a left side elevational view of the dial assembly and connected sensor module;
FIG. 5 is a front elevational view thereof;
FIG. 6 is a top plan view of the dial assembly and sensor module with portions removed to illustrate alignment of a sensor with an actuator that changes the electronic state of the sensor depending on the rotational position of the actuator with respect to the sensor.
FIG. 7 is a top plan view of the dial assembly with the sensor module removed, to view the actuator in accordance with an exemplary embodiment of the invention;
FIG. 8 is a top rear isometric exploded view of the dial assembly in accordance with an exemplary embodiment of the invention;
FIG. 9 is a bottom rear isometric exploded view of the dial assembly;
FIG. 10 is a sectional view of the dial assembly and connected sensor module taken along line 10-10 of FIG. 4;
FIG. 11 is a sectional view thereof taken along line 11-11 of FIG. 5;
FIG. 12 is a top left rear isometric view of the dial assembly;
FIG. 13 is a top right rear isometric view thereof;
FIG. 14 is a top right rear isometric view of the sensor module in accordance with an exemplary embodiment of the invention, with portions thereof shown as transparent to illustrate the inner sensor board assembly associated therewith;
FIG. 15 is a top right rear exploded isometric view thereof.
FIG. 16 is a top front right isometric view of the sensor module;
FIG. 17 is a top front left isometric view thereof;
FIG. 18 is a top rear right isometric view thereof;
FIG. 19 is a top rear left isometric view thereof; and
FIG. 20 is a bottom rear right isometric view thereof.

It is noted that the drawings are intended to depict only typical embodiments of the invention and therefore should not be considered as limiting the scope thereof, which is defined by the appended claims. It is further noted that the drawings may not be necessarily to scale. The invention will now be described in greater detail with reference to the accompanying drawings.

### DETAILED DESCRIPTION OF THE INVENTION

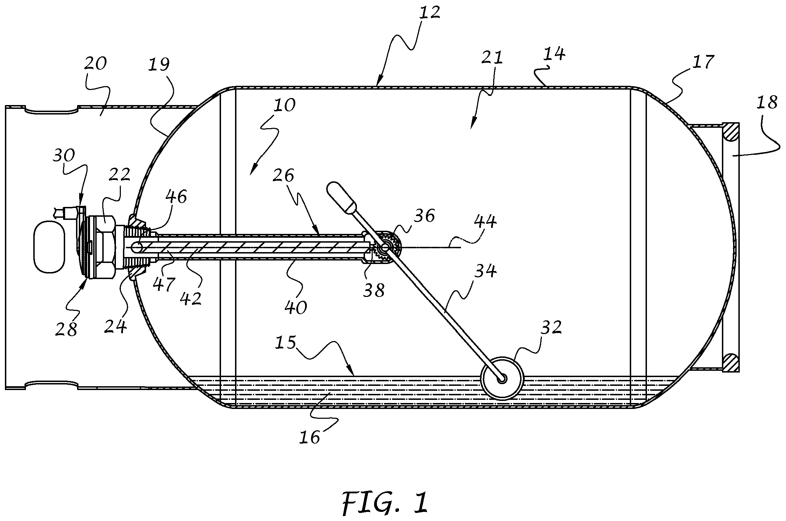

Referring to the drawings, and to FIG. 1 in particular, a liquid level gauge 10 for both visually observing and remotely determining a liquid level condition within a container, such as tank 12, in accordance with a preferred embodiment of the invention is illustrated. In accordance with one exemplary embodiment of the invention, the liquid level gauge 10 is connected to a propane tank or LP gas cylinder 12 that may either be stationary or movable depending on the particular intended use of the tank. For example, the tank 12 may be removably mounted on a forklift, generator, and other equipment, or permanently mounted at a stationary location near a business or residence for example, permanently mounted on a fuel supply vehicle, and so on.

The tank 12 is of conventional construction and includes a pressure cylinder comprising a cylindrical wall 14 and semi-spherical end walls 17 and 19 connected to opposite ends of the cylindrical wall 14 to form a pressure-resistant hollow interior 21 for holding a quantity of propane and/or other liquids 16 that may be stored under pressure, as well as liquids that require no pressure. An annular base 18 can be provided and is located at one end of the tank 12 near the end wall 17 for orienting the cylinder in an upright position during use and/or storage. An annular wall or valve guard 20 can also be provided and is located at the opposite end of the tank 12 and surrounding the end wall 19. Although not shown, the tank 12 may include other components typically associated with propane tanks or other pressurized or non-pressurized tanks, such as a fill/supply valve, over-pressure safety valve, and so on. As will be appreciated, the present invention is applicable to any tank or container configuration where liquid is stored therein and removed therefrom, where it is desirous to remotely determine a liquid level condition.

The liquid level gauge 10 of the present invention preferably includes a mounting head 22 connected to the end wall 19 of the tank 12 via a reinforced tank mounting portion 24 that is welded or otherwise secured to the end wall 19. The mounting head 22 has external threads (not shown) and the reinforced mounting portion has corresponding internal threads (not shown) for securing the liquid level gauge 10 to the tank 12 in a well-known manner. It will be understood that other mounting arrangements can be provided for the tank 12 and/or liquid level gauge 10.

For example, the mounting head may comprise a flange mounting arrangement with holes for fasteners extending through the flange as is well-known. Other means for mounting the liquid level gauge 10 to a tank or other container can be used, including NPT type threads, clamping, welding, and so on.

The liquid level gauge 10 further includes a sending unit 26 extending into the tank from one side of the mounting head 22, and an indicator assembly which includes a dial assembly 28 connected to the other side of the mounting head 22 outside of the tank 12 and a removable sensor module 30 operably associated with the dial assembly 28 for electronically determining a liquid level condition within the tank 12. Preferably, the sending unit 26 is isolated from the dial assembly 28 via the mounting head 22 so that the tank 12 is completely sealed when the mounting head 22 is installed. In this manner, the liquid level gauge 10 can be used in tanks under relatively high pressures, such as for measuring the level of LPG, propane, butane, and other cryogenic liquids stored under relatively high pressure within the tanks.

The sending unit 26 includes a float 32 connected to a pivot arm 34 which is in turn connected to a gear 36 rotatably mounted at a lower or distal end of a hollow support tube 40. The float rides along the surface or level 15 of the liquid 16 in the tank to cause rotation of the pivot arm 34 and gear 36. An upper or proximal end of the support tube 40 is connected to, and extends from, the mounting head 22 of the liquid level gauge 10 and into the tank 12. A spur gear 38 meshes with the gear 36 and causes rotation of a drive shaft 42 about its central axis 44 upon float movement. The drive shaft 42 extends coaxially through the support tube 40 and in turn rotates one or more drive magnets 46 connected to an upper or proximal end 47 of the drive shaft 42 within the mounting head 22 of the liquid level gauge 10.

The dial assembly 28 is preferably attached to the mounting head 22 and is magnetically driven by the rotating drive magnet(s) 46 to thereby indicate the level 15 of liquid 16 in the tank 12, as will be described in greater detail below. Further details of the mounting head 22 and sending unit 26 can be found in U.S. Patent No. 6,041,650 issued on March 28, 2000 to Swindler et al.

It will be understood that other types of sending units and mounting arrangements can be used.

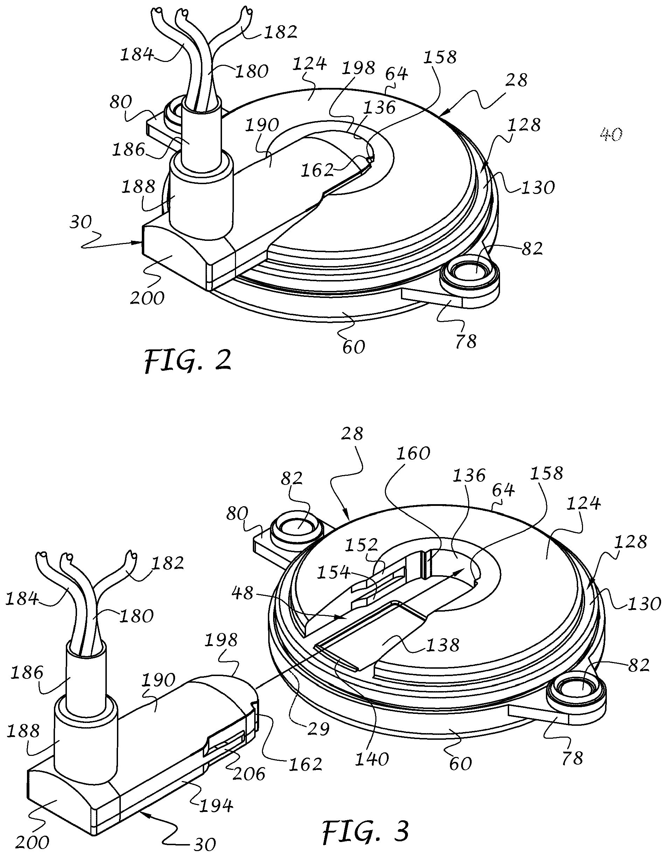

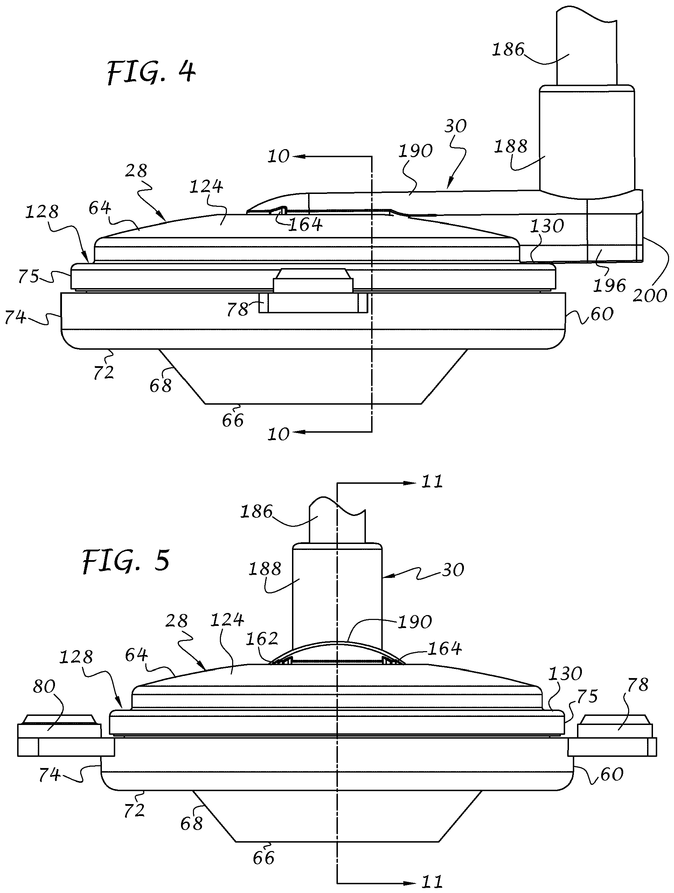

Referring now to FIGS. 2 to 5, enlarged views of the dial assembly 28 and removable sensor module 30 are shown. In FIG. 2, the sensor module 30 is received in the dial assembly 28 for electronically detecting the level of liquid 16 (FIG. 1) in the tank 12. In FIG. 3, the sensor module 30 is removed from the dial assembly 28 and ready to be installed, as represented by arrow 29, exposing a channel 48 formed in the dial assembly that complements the shape of the sensor module 30. In this manner, the sensor module 30 is received in the channel 48, preferably in a snap-fit engagement, as will be discussed in greater detail below. In FIGS. 4-5, enlarged elevational side and front views, respectively, of the dial assembly 28 and connected sensor module 30 are shown. In this position, the dial assembly and sensor module are locked together for electronically determining the level of liquid within the tank.

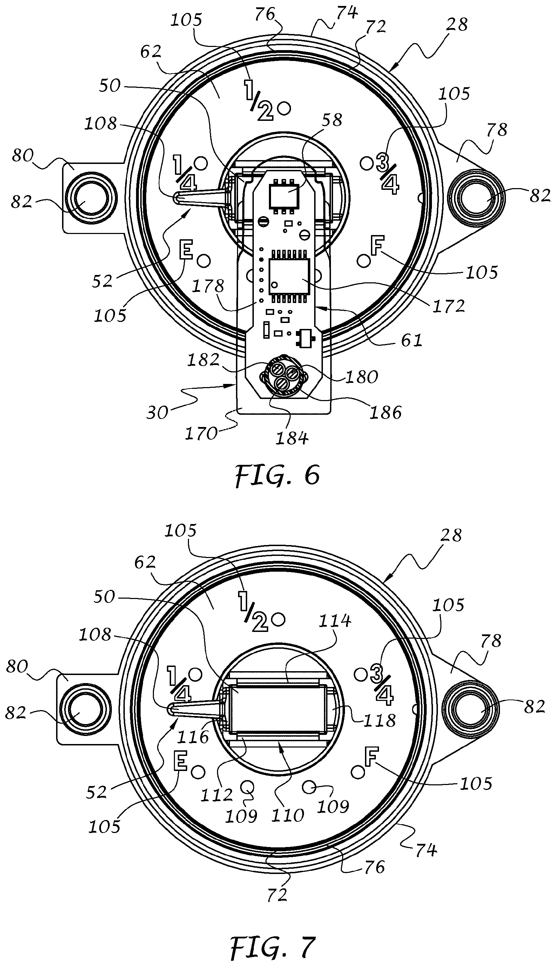

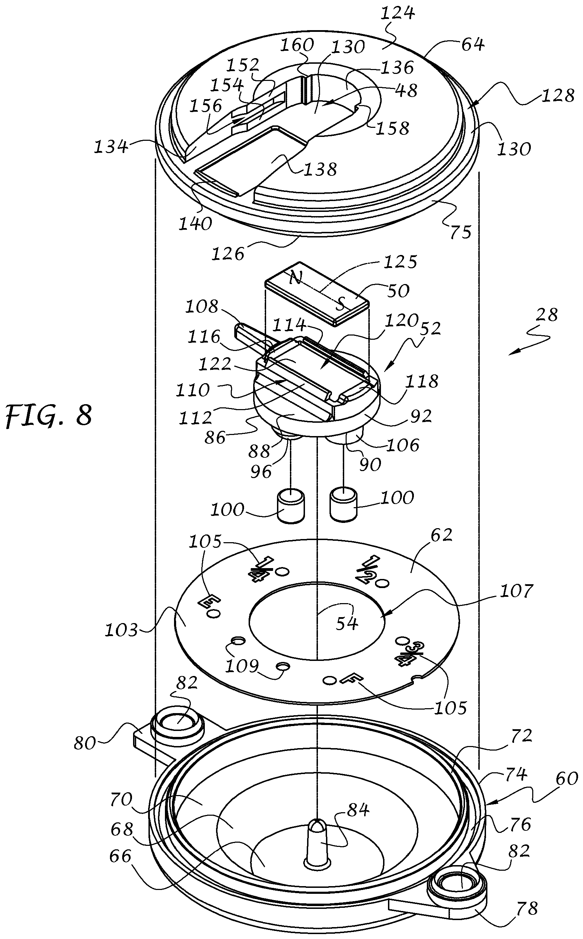

Referring now to FIGS. 6 and 7, the electronic determination of liquid level can be accomplished by providing an actuator 50 in the center of the dial assembly 28 for rotation about a central axis 54 (FIG. 8) with a pointer assembly 52. The pointer assembly 52 rotates in response to rotation of the drive magnet 46 (FIG. 1) of the sending unit 26 when a change in liquid level occurs, as described above. As shown in FIG. 6, a cover of the dial assembly 28 has been removed for clarity, and a housing 170 of the sensor module has been shown in phantom line, to reveal an electronics assembly 61 which includes a stationary sensor 58, which senses a change in position of the actuator 50 and creates an electronic state unique to the angular position of the actuator. In FIG. 7, the sensor module 30 has been removed for clarity to show the location and orientation of the actuator 50, as will be described in greater detail below. Accordingly, when the electronic state of the sensor 58 changes, a change in liquid level in the tank 12 (FIG. 1) can be determined.

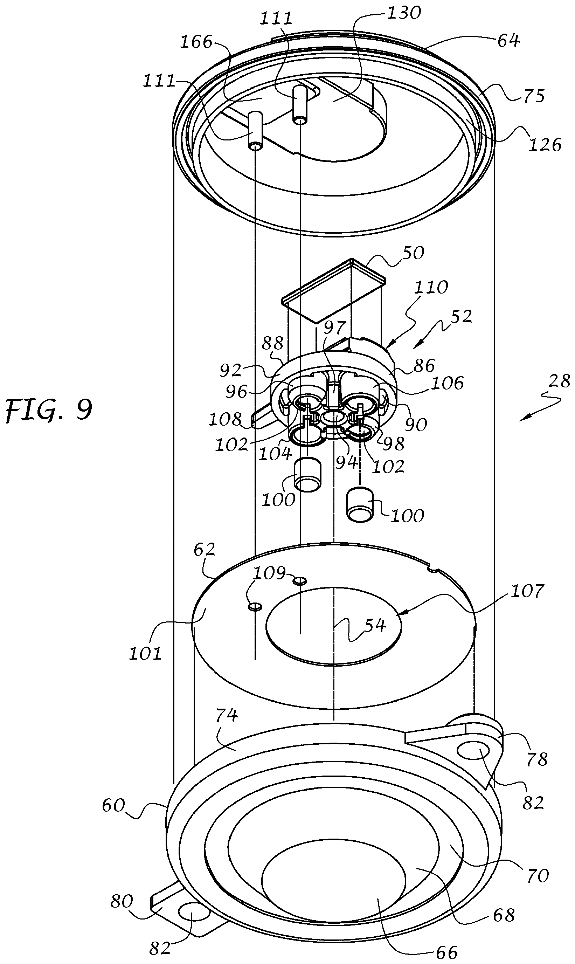

Referring now to FIGS. 8 and 9, the dial assembly 28, in accordance with an exemplary embodiment of the invention, includes a generally circular base 60, a circular scale plate 62 connected to the base 60, a pointer assembly 52 connected for rotational movement with respect to the base and scale plate 62, and a lens or cover 64 connected to the base 60 for isolating the scale plate 62 and pointer assembly 52 from the outside environment.

With reference to FIGS. 8-11, the base 60 is preferably circular in construction and includes a bottom wall 66, a frustro-conical side wall 68 extending upwardly and outwardly from the bottom wall, a support wall 70 that extends generally parallel with the bottom wall and receives the scale plate 62, an inner circular side wall 72 extending upwardly from the support wall 70, and an outer circular side wall 74 spaced from the inner wall 72 to form a groove 76 therebetween for receiving an outer circular wall or flange 75 of the cover 64. Mounting tabs 78 and 80 extend outwardly from the outer wall side wall 74 at diametrically opposite locations thereof. Mounting apertures 82 are formed in the tabs 78 and 80 for receiving mounting hardware, such as threaded screws (not shown), to mount the dial assembly 28 to the mounting head 22 (FIG. 1) of the liquid level gauge 10. However, it will be understood that other embodiments can use alternative fastening means known in the art. A generally conically-shaped pivot pin 84 is located at an axial center of the bottom wall 66 coincident with the rotational axis 54 and extends upwardly therefrom.

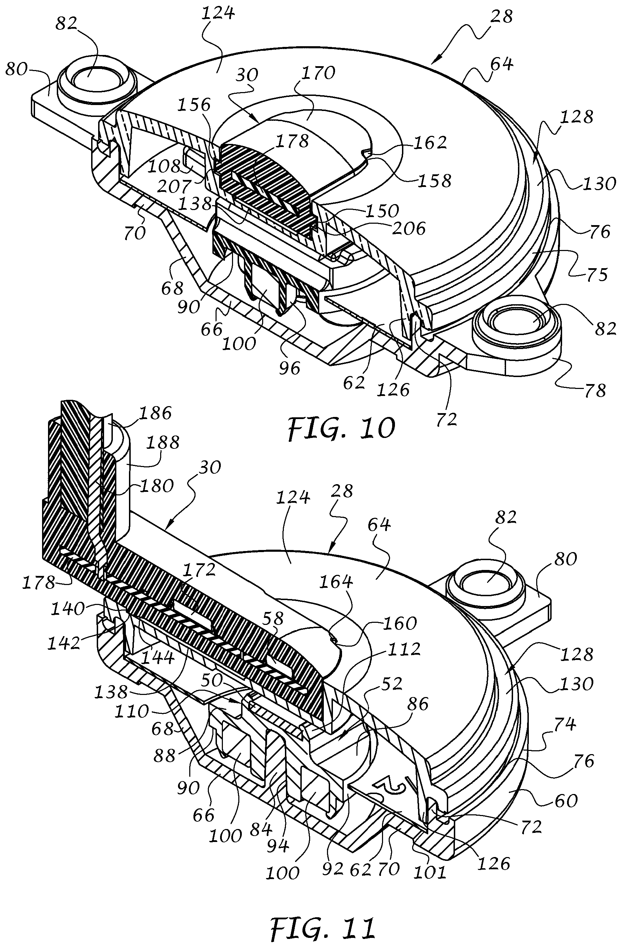

The pointer assembly 52 includes a generally circular-shaped body or disk 86 with an upper surface 88, a lower surface 90, and a side surface 92 extending therebetween. A central opening 94 (FIG. 9) is formed axially in a central boss 97 that extends downwardly from the lower surface 90. As best shown in FIG. 11, the central opening 94 complements the shape of the pin 84, so that the pointer assembly rotates with little or no play around the rotational axis 54 when the pin 84 is located in the central opening 88. Rotation of the pointer assembly is preferably limited in both the clockwise and counter-clockwise directions about the rotational axis 54. The body 86 and pin 84 can be constructed of low friction material and/or lubricated to allow the body 86 to effortlessly rotate on the pin 84. It will be understood that other well-known means for rotatably connecting the disk 86 to the base 60 can be used.

A first pair of diametrically spaced bosses 96 and 98 extend downwardly from the lower surface 90. A cylindrically-shaped driven magnet 100 is located in a bore 102 formed in each boss 96, 98. The ends of each boss 96, 98 can be crimped, staked, or otherwise deformed once the magnets 100 are installed, as shown for example in FIGS. 9-11, to hold the magnets in place. A second pair of diametrically spaced bosses 104 and 106 also extend downwardly from the lower surface 80 and each includes a bore 102 for receiving an additional magnet (not shown), potting material, or the like, so that the body 86 is balanced about the pivot pin 84. The driven magnets 100 are magnetically coupled to the drive magnet 46 associated with the drive shaft 42 (FIG. 1) of the liquid level gauge 10, and thus serve to cause corresponding rotation of the pointer assembly 52 with respect to the scale plate 62 (FIG. 8) when the float 32 is moved in response to a change in level 15 of liquid 16 within the tank 12 (FIG. 1).

Although the circular-shaped body or disk 86 has been shown as rotatably connected to the base, the disk can alternatively or additionally be rotatably connected to the lens or other structure.

A pointer 108 is preferably formed integral with the body 86 and extends radially outwardly from the side surface 92 for visually indicating a liquid level condition in conjunction with the scale disk 62. Although shown as somewhat triangular in shape, it will be understood that the pointer 108 can be of any suitable shape for indicating a liquid level condition.

The scale disk 62 is formed of a thin plate material and is annular in shape and includes a bottom surface 101 (FIG. 9) that faces the support wall 70 of the base 60 and is supported thereon, a top surface 103 (FIG. 8) with indicia 105 thereon indicative of the liquid level condition within the tank, and a central opening 107 that is sized to receive the circular body 86. The scale disk 62 is fixed with respect to the base 60 so that the pointer 108 rotates with respect to the scale disk 62 to visually indicate liquid level by an observer. Apertures 109 are formed in the scale disk 62 for receiving posts 111 (FIG. 9) associated with the cover 64 for holding the scale disk 62 against rotation. The posts 111 also serve as stop members that engage the pointer 108 to limit the angular rotation of the pointer assembly 52 between approximately empty and full conditions of the tank.

An actuator cradle 110 extends upwardly from the upper surface 88 of the body 86 and includes spaced side walls 112 and 114, a front wall 116, a rear wall 118 spaced from the front wall, and a bottom surface 122 extending between the side walls and the front and rear walls to form a generally rectangular-shaped space 120 for receiving an actuator 50. The cradle is preferably formed integrally with the body 86, but may be formed separately and connected to the body through well-known connection means. Preferably, the actuator 50 is also generally rectangular in shape and is sized to fit within the space 120. The actuator 50 is supported by the bottom surface 122 and can be retained in the space 120 by bending or crimping the side walls 112 and 114 slightly over the actuator 50 so that the actuator is sandwiched between the walls 112, 114 and the bottom surface 122. It will be understood that the actuator 110 can be connected to the body or disk 86 for rotation therewith using other connection means, such as adhesive bonding, press-fitting, mechanical fastening with brackets, threaded fasteners, hook and loop materials, and so on.

With this construction, the actuator 50 rotates with the pointer assembly 52 to change the electronic state of the stationary sensor 58 (FIG. 6) of the sensor module 30 proportional to an angular position of the actuator 50 to thereby determine a change in liquid level 15 (FIG. 1) in the tank 12.

In accordance with a preferred embodiment of the invention, the actuator 50 comprises a bar magnet with a north-south axis 125 (FIG. 8) preferably oriented along the length of the magnet 50, i.e. between its short sides so that the axis 125 is in alignment with the pointer 108. However, it will be understood that the north-south axis 125 can be oriented along the width of the magnet, i.e. between its long sides, between opposite corners, or along the thickness thereof.

The actuator magnet 50 can be a free-standing device when the cradle 110 and body 86 are constructed of non-magnetic material, such as aluminum, brass, plastic, composites, ceramics, and so on. When at least the cradle 110 is constructed of magnetically permeable material, the magnet can be in the form of a pot magnet, which directs the lines of magnetic flux through the cradle material. It will be understood that the actuator 50 is not limited to the particular shape as shown and described, but may be circular, square, or of any other shape that causes a change in orientation of the north-south axis or equivalents thereof when rotated or otherwise moved in response to a particular level of liquid within the tank.

Preferably, the stationary sensor 58 comprises a magnetic field sensor positioned at a center section of the bar magnet along the north-south axis 125 (FIG. 8) or other location where changes in magnetic flux are more pronounced. The stationary field sensor 58 comprises a Hall-effect sensor, and more preferably an integrated circuit (IC) magnetic field sensor chip that comprises pairs of Hall-effect sensors located at 90 degrees with respect to each other, e.g. along X and Y axes (not shown). In this manner, the magnetic angle of the north-south axis relative to the chip sensor can be measured and correlated with liquid level independent of magnetic field strength. One suitable sensor 58 can include part No. EM3242 by Asahi of Tokyo, Japan. This IC device includes a pair of Hall-effect sensors oriented in the X direction and a pair of similar sensors oriented in the Y direction, a preamplifier, angle detection processing circuitry for detecting the angle of the north-south axis of the magnet, and a digital to analog converter (DAC) for providing analog output proportional to the angular orientation of the north-south axis.

Although a particular magnetic sensor has been described with respect to this embodiment, it will be understood that other magnetic sensing devices can be used.

For example, other devices can include, but are not limited to, one or more solid state magnetic flux field sensors, the afore-mentioned Hall effect sensors, magnetoresistive (MR) sensors, anisotropic MR (AMR) sensors, giant magnetoresistance (GMR) sensors, solid state Micro-Electro-Mechanical Systems (MEMS), magnetic switches, or other devices or sensors for measuring the angle of the north-south axis or for otherwise determining a change in the angular orientation of the magnetic field of the actuator 50. With the use of one or more of the above sensors, it may not be necessary to have the sensor in alignment with the linear north-south axis of the magnet.

Moreover, in accordance with a further embodiment of the invention, nonmagnetic sensing technologies such as proximity detectors using capacitance, optical, or other measurement technologies, and so on, can be used in conjunction with related structure associated with the dial assembly 28. For example, the actuator can be in the form of one or more magnets, LED's, optical fibers or other light source, or other contactless actuator/sensor arrangements to remotely change the electrical state of the sensor. In the event that optical sensors are used, the cover 64 can be formed of a material that is translucent or transparent to the wavelength of the light source so that the sensor elements can readily detect movement of the light source as the liquid level in the container rises and falls.

With the above-described arrangement, the pointer assembly 52 can be used with a variable thickness magnet of the prior art as discussed with respect to U.S. Patent No. 5,564,632 discussed above, which varies in magnetic field strength proportional to the thickness of the magnet. Since such variable thickness magnets also have a north-south axis, the stationary sensor 58 can determine the angular position of such magnets independent of magnetic field strength. However, the prior art pointer with single Hall-effect sensor, such as disclosed in the above-referenced '632 patent, cannot be used with the magnetic actuator 50 of the present invention, since the magnetic field strength of the actuator 50 does not change in a consistent, measureable amount.

In order to allow the sensor module 30 of the present invention to be installed in both the liquid level gauge 10 of the present invention and prior art gauges as referenced in the `632 patent above, and create or generate an electrical signal indicative of liquid level for both the liquid level gauge 10 of the invention and the prior art liquid level gauges as disclosed in the '632 patent, and at the same time prevent unauthorized sensor modules, such as referenced in the '632 patent, from being installed in the liquid level gauge 10 of the present invention, as the Hall-effect sensor of the unauthorized sensor module does not detect the angle of the north-south axis of the actuator 50, and therefore will not work with the liquid level gauge 10, cooperating features associated with the sensor module 30 and the dial assembly 28 of the present invention are provided, such features also allowing the sensor module 30 to be installed in the prior art liquid level gauge such as referenced in the `632 patent to generate electrical signals indicative of liquid level in the tank, as will be described in greater detail below.

With particular reference to FIGS. 8-13, the cover 64 preferably includes an upper wall 124 that has a generally convex shape, an inner circular side wall 126 extending downwardly from the upper wall 124, an annular depression 128 extending around the periphery of the upper wall 124 and defining a bottom wall 130 from which the outer circular wall or flange 75 extends. As described above, the outer circular wall 75 is received in the annular groove 76 (FIG. 8) of the base 60 when assembled. Likewise, the inner circular side wall 126 is juxtaposed with the inner circular side wall 72 (see FIGS. 10 and 11) of the base 50 when assembled and can be connected together through any well-known means such as adhesive bonding, heat welding, mechanical fastening, mutually engageable threads, friction fit, and so on.

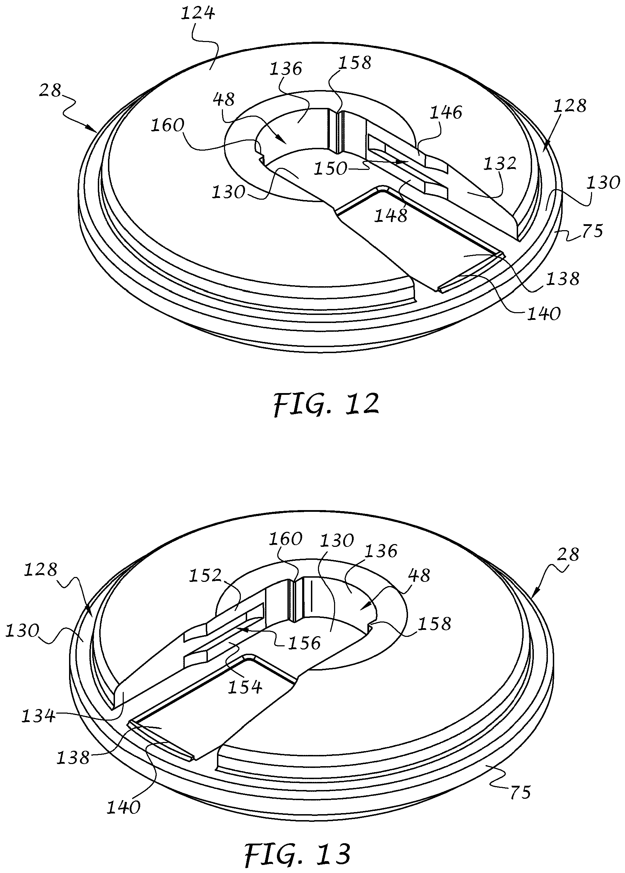

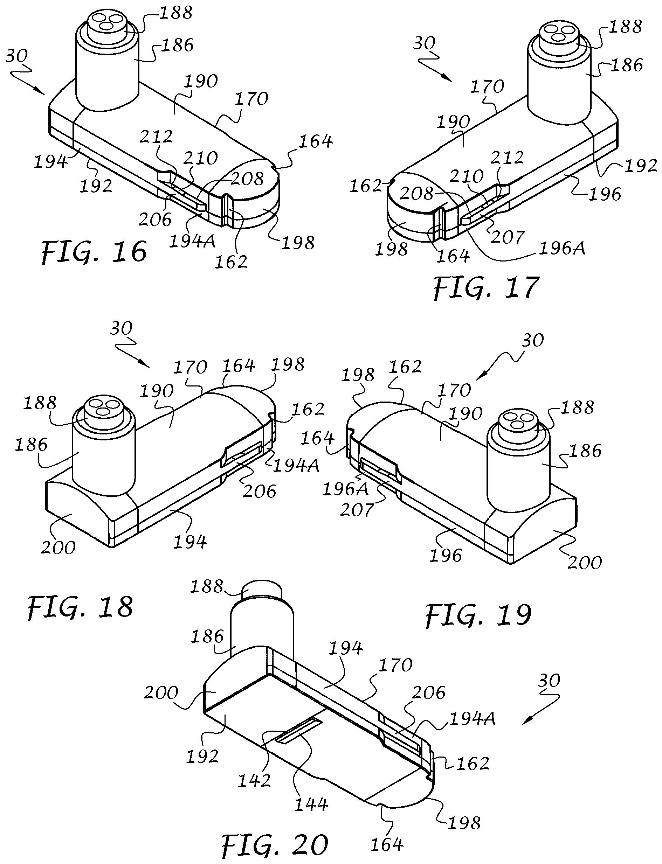

A channel 48 that complements the shape of the sensor module 30 is formed in the cover 64 and includes a right side surface 132 (FIG. 12), a left side surface 134 (FIG. 13), and a generally concave front surface 136 extending between the bottom wall 130 and the upper wall 124 and between the right and left side surfaces 132 and 134, respectively. A depression 138 is formed in the bottom wall 130 within the channel 48 and includes a locking edge 140 that engages with a locking protrusion 142 (FIGS. 11 and 20) of the sensor module 30 when installed in the channel 48. The locking protrusion 142 of the sensor module 30 includes a ramped surface portion 144 to facilitate insertion of the locking protrusion 142 of the sensor module 30 into the depression 138. A first pair of elongate guides 146 and 148 (FIG. 12) extend laterally into the channel 48 from the right side surface 132 to form a first elongate gap 150 therebetween. Likewise, a second pair of elongate guides 152 and 154 (FIG. 13) extend laterally into the channel 48 from the left side surface 134 to form a second elongate gap 156 therebetween. The purpose of the first and second gaps will be described in greater detail below.

A first upright go-no-go protrusion 158 is formed at an intersection between the right side surface 132 and the front surface 136, while a second upright go-no-go protrusion 160 is formed at an intersection between the left side surface 134 and the front surface 136. The go-no-go protrusions 158 and 160 are shown as generally triangular in shape, but can be formed of various other shapes.

The go-no-go protrusions 158 and 160 work together with complementary first and second go-not-go cavities 162 and 164 (FIGS. 16 and 17), respectively, formed in the sensor module 30, as will be described in greater detail below, to ensure that the sensor module 30 can be inserted into the channel 48 and locked in place with the locking protrusion 142 of the sensor module 30 seated against the locking edge 140 of the cover 64. Conversely, the upright go-no-go protrusions 158 and 160 ensure that unauthorized sensor modules, such as discussed above, cannot be installed in the channel 48 of the cover 64 and locked in position, thereby preventing false or incorrect readings from unauthorized sensor modules.

It will be understood that the first and second go-no-go protrusions are given by way of example only, and can vary from one protrusion to multiple protrusions. It will be further understood that the one or more protrusions can have other shapes or configurations and can extend in other directions besides upright, such as laterally, radially, at an angle with respect to the bottom wall 130, front surface 136 and/or side surfaces 132 and 134, and so on, so long as the sensor module 30 has one or more complementary-shaped features to allow insertion of the sensor module 30 into the channel 48 sufficiently to be locked into position while preventing unauthorized sensor modules from being inserted into the channel 48 in a locked in position.

As shown most clearly in FIG. 9, the posts 111 extend downwardly from a lower wall 166 of the depression 138 adjacent to the bottom wall 130. The posts 111 extend through the apertures 109, as previously described, to act as stop members for limiting the rotation of the pointer assembly 52 while properly orienting the scale plate 62 with respect to the central axis 54 so that the indicia 105 indicative of liquid level condition within the tank are properly aligned with respect to the cover 64 and the pointer 108 during assembly. The cover 64 can be constructed of any suitable transparent or translucent material which allows the observer to view the indicia 105 on the scale plate 62 through the upper wall 124. It will be understood that the term "transparent" as used herein does not necessarily refer to completely transparent but rather denotes sufficient transparency to allow an observer to visually determine a position of the pointer 108 with respect to the indicia 105.

In accordance with a further embodiment of the invention, the cover 64 can be constructed of opaque material and the pointer 108, scale plate 62, and related structure, can be removed when only electronic signals related to the liquid level condition in the tank are needed, such as when the dial assembly is mounted at a location where it may be difficult to directly view the pointer and indicia by an observer.

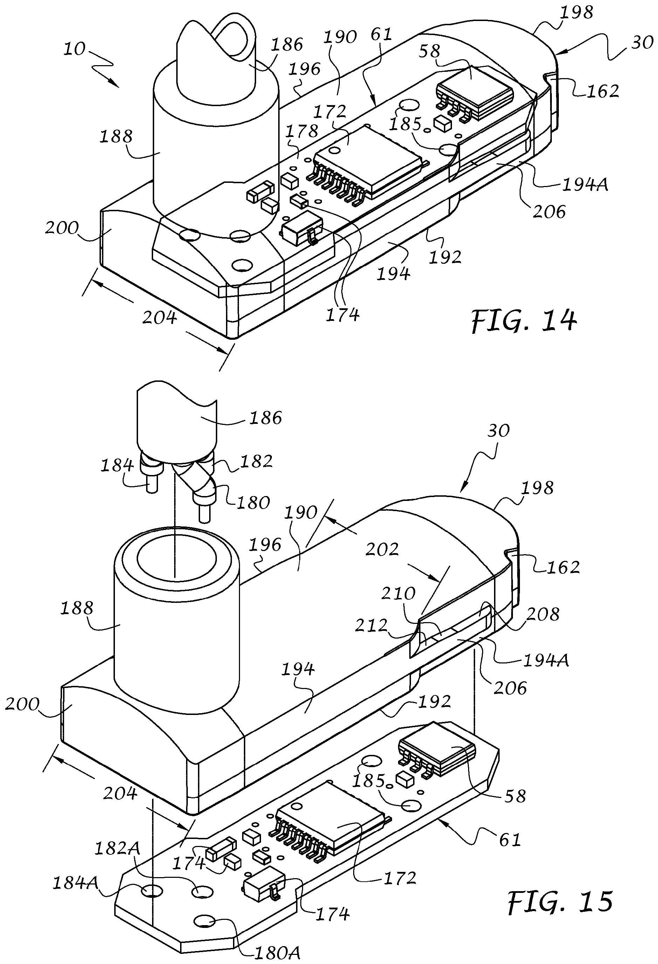

Referring now to FIGS. 14-20, the sensor module 30 preferably includes an electronics assembly 61 located within a housing 170. The housing 170 is complementary in shape to the channel 48 formed in the cover 64. Preferably, the housing is formed around the electronics assembly 61 so that the electronics, including the sensor 58 previously described, are embedded within the housing and protected from the outside environment.

The electronics assembly 61 can include the sensor 58 as previously described, along with a processor 172, a temperature sensor 174, and other passive and/or active electronic components 176 mounted on a printed circuit board (PCB) 178 for providing power to the sensor 58 and receiving electronic signals therefrom indicative of the north-south axis 125 (FIG. 8) of the actuator magnet 50. Electrical wires 180, 182, and 184 (FIG. 15) are electrically and mechanically connected to the PCB 178 via through-holes 180A, 182A, and 184A, respectively, and extend therefrom for providing power and ground to the electronic components from an outside power source, and analog and/or digital signal output of the liquid level condition within the tank, so that the tank condition can be indicated remotely on a display, illuminated bargraph, one or more sound producing devices, and/or other means for communicating the liquid level within the tank. The wires are surrounded by a protective sheath 186 which is in turn surrounded by a cylindrical portion 188 of the housing 170. As previously described, the sensor 58 senses a change in position of the north-south axis 125 (FIG. 8) of the actuator magnet 50 and creates an electronic signal unique to the angular position of the actuator. Accordingly, when the electronic state of the sensor 58 changes, a change in liquid level in the tank 12 (FIG. 1) can be determined and remotely communicated without the need to directly view the gauge by an observer.

The housing 170 of the sensor module 30 is preferably formed through overmolding or similar manufacturing techniques to completely surround over the electronics assembly 61 including the PCB 178 and wires 180, 182, and 184. Enlarged thru-holes 185 (FIG. 15) can be formed in the PCB 178 so that the overmolding material can flow around and through the PCB to thereby secure the housing 170 thereto. In this manner, the electronics assembly 61 is completely isolated from the environment and has no moving parts, thereby creating a very robust sensor module.

The housing 170 preferably includes an upper surface 190 that has a generally convex shape, a lower surface 192 that is generally flat, with the locking protrusion 142 and ramped surface portion 144 (FIG. 20) extending downwardly therefrom, a first right side surface 194 that converges toward a second right side surface 194A (FIGS. 14-16), and a first left side surface 196 that converges toward a second left side surface 196A (FIG. 17). The first and second left and right side surfaces extend between the upper surface 190 and the lower surface 192. A front surface 198 of the housing 170 extends between the second right side surface 194A and second left side surface 196A and between the upper surface 190 and lower surface 192. Likewise, a rear surface 200 extends between the first right side surface 194 and the first left side surface 196. The second right and left side surfaces define a relatively narrow forward section 202 that is received in the channel 48 (FIG. 3) of the cap 64 when the sensor module 30 is inserted into the channel 48. Likewise, the first right and left side surfaces define a relatively wide rearward section 204 that extends rearwardly from the channel 48 when the sensor module 30 is installed therein.

A first elongate ledge or finger 206 extends laterally outwardly from the second right side surface 194A and a second elongate ledge or finger 207 extends laterally outwardly from the second left side surface 196A. Each elongate ledge 206, 207 includes a first section 208 (best shown in FIG. 15) having a first thickness, a second section 210 having a second thickness, and a third section 212 having a third thickness. Preferably, the third thickness is greater than the second thickness which is greater than the first thickness so that the first elongate ledge 206 can be received into the first elongate gap 150 (FIGS. 10 and 12) and the second elongate ledge 207 can be received into the second elongate gap 156 (FIG. 13) with increasing frictional engagement between the first elongate ledge 206 and the first pair of elongate guides 146 and 148, respectively, and the second elongate ledge 207 and the second pair of elongate guides 152 and 154, respectively, as the sensor module 30 is pushed further into the channel 48 during installation of the sensor module into the dial assembly 28 to ensure a positive snap-fit engagement between the locking protrusion 142 and the locking edge 140 (FIG. 11), as well as a snug fit between the sensor module 30 and dial assembly 28. In this manner, vibration or other relative movement between the sensor module 30 and the dial assembly 28 is substantially reduced or eliminated, especially where the present invention is installed on motorized machinery, equipment, or vehicles. The ramped surface portion 144 of the locking protrusion 142 facilitates insertion of the locking protrusion 142 into the depression 138 and prevents inadvertent separation of the dial assembly 28 and sensor module 30 during use. In
order to remove the sensor module 30 from the dial assembly 28, the rear section 204 of the sensor module is lifted slightly until the locking protrusion 42 clears the locking edge 140 (FIG. 11) and then slid out of the cover 64.

The first go-no-go cavity 162 is formed at an intersection between the front surface 198 and the second right side surface 194A. Likewise, the second go-no-go cavity 164 is formed at an intersection between the front surface 198 and the second left side surface 196A. The first and second cavities preferably complement the shape(s) of the first and second go-no-go protrusions 158 and 160, respectively, so that the protrusions are received in their respective cavities to allow full insertion and snap-fit locking of the sensor module with respect to the dial assembly 28 with the locking protrusion 142 of the sensor module 30 seated against the locking edge 140 of the cover 64. Conversely, the upright go-no-go protrusions 158 and 160 ensure that unauthorized sensor modules, such as discussed above, cannot be installed in the channel 48 of the cover 64 and locked in position, thereby preventing the installation of, and thus the consequent false or incorrect readings from, unauthorized sensor modules.

It will be understood that the term "preferably" as used throughout the specification refers to one or more exemplary embodiments of the invention and therefore is not to be interpreted in any limiting sense. It will be further understood that the term "connect" and its various derivatives as may be used throughout the specification refer to components that may be joined together either directly or through one or more intermediate members. In addition, terms of orientation and/or position as may be used throughout the specification relate to relative rather than absolute orientations and/or positions. Moreover, the term "generally" as used throughout the specification includes features that range from approximately to completely. For example, the phrase "generally circular" can range from approximately to predominantly to completely circular, depending on the features, manufacturing tolerances, and other disruptions that may occur in the design, manufacture, assembly, etc., that may interrupt the circular nature of the feature and/or component being described.

It will be appreciated by those skilled in the art that changes could be made to the embodiments described above.

Although the present invention has been described in conjunction with LPG and similar tanks, it will be understood that other tank types and/or shapes can be used, and that the level of other liquids can be detected and displayed in a similar manner. Moreover, it will be appreciated that the exemplary embodiments of the invention are not limited to the particular shapes or configurations as shown and described, such as circular, curved, convex, and so on, but can greatly vary.

By way of example, the cover, base, and other components are described as generally circular in shape, but can be square, rectangular, triangular, octagonal, and/or any other suitable shape so long as one or more of the described functions can be performed. It will be understood, therefore, that this invention is not limited to the particular embodiments disclosed, but it is intended to cover modifications within the scope of the present invention as defined by the appended claims.

## Claims

1. An indicator assembly (10) for determining a liquid level condition within a tank (12), the indicator assembly comprising:
a dial assembly (28) adapted for connection to the tank (12), the dial assembly (28) including:
a base (60);
a cover (64) connected to the base (60), the cover having a channel (48) formed in the cover (64) with a right side surface (132), a left side surface (134) spaced from the right side surface (132), a front surface (136) extending between the right and left side surfaces, and a bottom wall (130) extending between the right and left side surfaces and from the front surface (136); an axial direction being formed from the bottom wall of the channel (48) to an upper wall (124) of the cover, said axial direction being parallel to a central axis (44) of the indicator assembly (10); an actuator (50) located between the base (60) and the cover (64), the actuator (50) being movable in response to a change in the liquid level condition in the tank; and the indicator assembly further comprising:
a sensor module (30) capable of being moved to a fully seated position in the cover (64) in a sliding direction perpendicular to the axial direction, the sensor module (30) including:
a housing (170) for insertion in the channel (48), the housing having an upper surface (190), a lower surface (192) spaced from the upper surface (190), a first right side surface (194) and a first left side surface (196) extending between the upper surface (190) and the lower surface (192); and
at least one sensor (58) located in the housing for determining movement of the actuator from one position to another in response to a change in liquid level within the tank;
**characterized in that** the cover comprises at least one go-no-go protrusion (158, 160) projecting into the channel in the cover (64); and **in that**
the sensor module is an authorized sensor module and comprises at least one go-no-go cavity (162, 164) formed in the housing (170), the at least one go-no-go cavity (162, 164) being shaped to prevent interference with the at least one go-no-go protrusion (158, 160) projecting into the channel (48), so that the authorized sensor module (30) can be moved to the fully seated position in the cover (64) such that the at least one sensor (58) is aligned with the actuator (50) for generating signals related to the liquid level condition;
wherein the at least one go-no-go protrusion extends in an axial direction between the bottom wall of the channel (48) and an upper wall (124) of the cover, and the at least one go-no-go cavity (162, 164) extends in an axial direction between a lower surface (192) and an upper surface (190) of the housing; and
wherein an unauthorized sensor module is not capable of being moved to the fully seated position in the cover (64) due to the absence of the at least one go-no-go cavity (162, 164) in the unauthorized sensor module causing the at least one go-no-go protrusion (158, 160) to interfere with movement of the unauthorized sensor module toward the fully seated position, thereby preventing alignment of the unauthorized sensor module with the at least one sensor (58) and thus preventing the unauthorized sensor module from sending incorrect signals related to the liquid level condition.

2. An indicator assembly according to claim 1, wherein the dial assembly comprises a pair of spaced go-no-go protrusions (158, 160) formed in the channel (48) and the sensor module comprises a pair of spaced go-no-go cavities (162, 164) coincident with the pair of spaced go-no-go protrusions (158, 160), with each go-no-go cavity having sufficient clearance around its respective go-no-go cavity to thereby permit the authorized sensor module to be moved to the fully seated position in the cover (64).

3. An indicator assembly according to claim 2, wherein a sending unit (26) adapted for insertion into the tank (12) includes a mounting head (22) connectable to the tank (12), a float (32) connected to an outer end of a pivot arm (34) and a gear (36) connected to an opposite end of the pivot arm for meshing with a spur gear (38) connected to a lower end of a drive shaft (42) extending toward the mounting head for rotation about a central axis (44) thereof upon pivoting movement of the pivot arm (34) in response to a change in liquid level in the tank (12), and a drive magnet (46) is connected to an upper end of the drive shaft (42) for rotation about the central axis (44), with the actuator (50) being magnetically coupled to the drive magnet (46) to thereby cause rotation of the actuator (50) about a central axis (44) in response to a change in the liquid level condition in the tank.

4. An indicator assembly according to claim 3, wherein the at least one sensor (58) comprises a first sensor and a second sensor oriented approximately 90 degrees with respect to each other for detecting rotation of the actuator (50) about the central axis and determining the liquid level condition within the tank.

5. An indicator assembly according to claim 4, wherein the actuator (50) comprises a magnet with a north-south axis, a rotational position of which is detected by the first and second sensors for determining the liquid level condition within the tank.

6. An indicator assembly according to claim 4, wherein the first and second sensors comprise Hall-effect sensors.

7. An indicator assembly according to claim 1, wherein the at least one go-no-go protrusion (158, 160) projecting into the channel (48) comprises first and second go-no-go protrusions, with the first go-no-go protrusion (158) located at an intersection between the right side surface (132) and the front surface (136), and the second go-no-go protrusion (160) located at an intersection between the left side surface (134) and the front surface (136), and
wherein the housing of the sensor module (30) further comprises:
a front surface (198) extending between the right (194) and left (196) side surfaces of the housing (170); and wherein the lower surface (192) extends between the right and left side surfaces and extends from the front surface of the housing (170);
wherein the at least one go-no-go cavity comprises first and second go-no-go cavities (162, 164) with the first go-no-go cavity (162) located at an intersection between the first side surface (194) and the front surface (198) of the housing (170), and the second go-no-go cavity (164) located at an intersection between the left side surface (196) and the front surface (198) of the housing (170) for mating with the first and second go-no-go protrusions (158, 160), respectively.

8. An indicator assembly according to claim 7, wherein the housing (170) further comprises a locking protrusion (142) extending downwardly from the lower surface (192) of the housing and the channel (48) further comprises a depression (138) formed in the lower surface (130) of the channel (48) with a rearward locking edge (140) that engages the locking protrusion (142) when the sensor module (30) is inserted in the channel (48) into the fully seated position with the first and second go-no-go cavities (162, 164) in mating relationship with the first and second go-no-go protrusions (158, 160), respectively, to thereby removably retain the sensor module (30) within the channel (48) in a snap-fit engagement.

9. An indicator assembly according to claim 1, and further comprising:
a pivot pin (84) located on a bottom wall (66) of the base (60) and extending upwardly and defining a rotational axis (54);
a pointer assembly (52) including:
a scale plate (62) with indicia (105) thereon for indicating liquid level;
a body (86) with a central opening (94) formed axially therein for receiving the pivot pin (84) so that the body (86) rotates about the rotational axis (54), the body having a pointer (108) aligned with the indicia (105) for visually indicating the liquid level condition;
a first pair of diametrically spaced bosses (96, 98) extending downwardly from a lower surface (80) of the body (86);
a driven magnet (100) located in each boss (96, 98);
wherein outer ends of the bosses (96, 98) are deformed to hold the driven magnets (100) in place, the driven magnets being magnetically couplable to a drive magnet (46) associated with a drive shaft (42) of a liquid level sending unit (26), so that the body rotates upon rotation of the drive shaft (42) to cause corresponding rotation of the pointer (108) with respect to the scale plate (62) in response to a change in the liquid level condition of the tank.

10. An indicator assembly according to claim 9, and further comprising a cradle (110) located on the body (86) for receiving and holding the actuator (50) such that the actuator rotates about the rotational axis (54) with the body.

11. An indicator assembly according to claim 10, wherein the at least one sensor (58) comprises a first sensor and a second sensor oriented approximately 90 degrees with respect to each other for detecting rotation of the actuator (50) about the central axis (54) and determining the liquid level condition within the tank (12).

## Patentansprüche

1. Anzeigeanordnung (10) zum Bestimmen eines Flüssigkeitspegelzustands in einem Tank (12), wobei die Anzeigeanordnung umfasst:
eine Drehscheibenanordnung (28), die zum Verbinden mit dem Tank (12) geeignet ist, wobei die Drehscheibenanordnung (28) beinhaltet:
eine Basis (60);
einen Deckel (64), der mit der Basis (60) verbunden ist, wobei der Deckel einen im Deckel (64) gebildeten Kanal (48) mit einer rechten Seitenfläche (132), einer von der rechten Seitenfläche (132) beabstandeten linken Seitenfläche (134), einer sich zwischen der rechten und der linken Seitenfläche erstreckenden Vorderfläche (136), und einer sich zwischen der rechten und der linken Seitenfläche und von der Vorderfläche (136) erstreckenden Bodenwand (130) aufweist; wobei eine axiale Richtung von der Bodenwand des Kanals (48) zu einer oberen Wand (124) des Deckels gebildet ist, wobei die axiale Richtung zu einer Mittelachse (44) der Anzeigeanordnung (10) parallel ist; einen Aktor (50), der zwischen der Basis (60) und dem Deckel (64) angeordnet ist, wobei der Aktor (50) in Reaktion auf eine Veränderung des Flüssigkeitspegelzustands im Tank bewegt werden kann; und wobei die Anzeigeanordnung weiter umfasst:
ein Sensormodul (30), das in einer senkrecht zur axialen Richtung verlaufenden Schieberichtung zu einer vollständig sitzenden Position im Deckel (64) bewegt werden kann, wobei das Sensormodul (30) beinhaltet:
ein Gehäuse (170) zum Einsetzen in den Kanal (48), wobei das Gehäuse eine obere Fläche (190), eine von der oberen Fläche (190) beabstandete untere Fläche (192), eine erste rechte Seitenfläche (194) und eine erste linke Seitenfläche (196) aufweist, welche sich zwischen der oberen Fläche (190) und der unteren Fläche (192) erstrecken; und
mindestens einen im Gehäuse angeordneten Sensor (58) zum Bestimmen von Bewegung des Aktors von einer Position zu einer anderen in Reaktion auf eine Veränderung des Flüssigkeitspegels im Tank;
**dadurch gekennzeichnet, dass** der Deckel mindestens einen Geht/Geht-nicht-Vorsprung (158, 160) umfasst, der in den Kanal im Deckel (64) vorspringt; und dadurch, dass
das Sensormodul ein zugelassenes Sensormodul ist und mindestens eine Geht/Geht-nicht-Aussparung (162, 164) umfasst, die im Gehäuse (170) gebildet ist, wobei die mindestens eine Geht/Geht-nicht-Aussparung (162, 164) so geformt ist, dass Behinderung mit dem mindestens einen in den Kanal (48) vorspringenden Geht/Gehtnicht-Vorsprung (158, 160) verhindert wird, sodass das zugelassene Sensormodul (30) derart zu der vollständig sitzenden Position im Deckel (64) bewegt werden kann, dass der mindestens eine Sensor (58) zum Erzeugen von Signalen in Zusammenhang mit dem Flüssigkeitspegelzustand mit dem Aktor (50) fluchtet;
wobei sich der mindestens eine Geht/Geht-nicht-Vorsprung in einer axialen Richtung zwischen der Bodenwand des Kanals (48) und einer oberen Wand (124) des Deckels erstreckt, und sich die mindestens eine Geht/Geht-nicht-Aussparung (162, 164) in einer axialen Richtung zwischen einer unteren Fläche (192) und einer oberen Fläche (190) des Gehäuses erstreckt; und
wobei ein nicht zugelassenes Sensormodul nicht zu der vollständig sitzenden Position im Deckel (64) bewegt werden kann aufgrund des Fehlens der mindestens einen Geht/Geht-nicht-Aussparung (162, 164) in dem nicht zugelassenen Sensormodul, welches bewirkt, dass der mindestens eine Geht/Geht-nicht-Vorsprung (158, 160) Bewegung des nicht zugelassenen Sensormoduls in Richtung der vollständig sitzenden Position behindert, wodurch das Fluchten des nicht zugelassenen Sensormoduls mit dem mindestens einen Sensor (58) verhindert wird und dadurch verhindert wird, dass das nicht zugelassene Sensormodul fehlerhafte Signale in Zusammenhang mit dem Flüssigkeitspegelzustand sendet.

2. Anzeigeanordnung nach Anspruch 1, wobei die Drehscheibenanordnung ein Paar beabstandeter Geht/Geht-nicht-Vorsprünge (158, 160) umfasst, die im Kanal (48) gebildet sind, und das Sensormodul ein Paar beabstandeter Geht/Geht-nicht-Aussparungen (162, 164) umfasst, die mit dem Paar beabstandeter Geht/Geht-nicht-Vorsprünge (158, 160) übereinstimmen, wobei jede Geht/Geht-nicht-Aussparung ausreichend Spielraum um ihre jeweilige Geht/Geht-nicht-Aussparung herum aufweist, um dadurch zu ermöglichen, dass das zugelassene Sensormodul zu der vollständig sitzenden Position im Deckel (64) bewegt wird.

3. Anzeigeanordnung nach Anspruch 2, wobei eine Sendeeinheit (26), die zum Einsetzen in den Tank (12) geeignet ist, einen Montagekopf (22), der mit dem Tank (12) verbunden werden kann, einen mit einem äußeren Ende eines Schwenkarms (34) verbundenen Schwimmer (32), und ein mit einem gegenüberliegenden Ende des Schwenkarms verbundenes Zahnrad (36) zum Verzahnen mit einem Stirnrad (38) beinhaltet, welches mit einem unteren Ende einer sich in Richtung des Montagekopfs erstreckenden Antriebswelle (42) verbunden ist zum Drehen um eine Mittelachse (44) derselben bei Schwenkbewegung des Schwenkarms (34) in Reaktion auf eine Veränderung des Flüssigkeitspegels im Tank (42), und ein Antriebsmagnet (46) mit einem oberen Ende der Antriebswelle (42) verbunden ist zum Drehen um die Mittelachse (44), wobei der Aktor (50) magnetisch mit dem Antriebsmagneten (46) gekoppelt ist, um dadurch in Reaktion auf eine Veränderung des Flüssigkeitspegelzustands im Tank Drehung des Aktors (50) um eine Mittelachse (44) zu bewirken.

4. Anzeigeanordnung nach Anspruch 3, wobei der mindestens eine Sensor (58) einen ersten Sensor und einen zweiten Sensor, die etwa 90 Grad in Bezug zueinander ausgerichtet sind, zum Erkennen von Drehung des Aktors (50) um die Mittelachse und Bestimmen des Flüssigkeitspegelzustands im Tank umfasst.

5. Anzeigeanordnung nach Anspruch 4, wobei der Aktor (50) einen Magneten mit einer Nord-Süd-Achse umfasst, dessen Drehposition von dem ersten und dem zweiten Sensor zum Bestimmen des Flüssigkeitspegelzustands im Tank erkannt wird.

6. Anzeigeanordnung nach Anspruch 4, wobei der erste und der zweite Sensor Hall-Effekt-Sensoren umfassen.

7. Anzeigeanordnung nach Anspruch 1, wobei der mindestens eine in den Kanal (48) vorspringende Geht/Geht-nicht-Vorsprung (158, 160) einen ersten und einen zweiten Geht/Geht-nicht-Vorsprung umfasst, wobei der erste Geht/Geht-nicht-Vorsprung (158) an einem Schnittpunkt zwischen der rechten Seitenfläche (132) und der Vorderfläche (136) angeordnet ist, und der zweite Geht/Geht-nicht-Vorsprung (160) an einem Schnittpunkt zwischen der linken Seitenfläche (134) und der Vorderfläche (136) angeordnet ist, und
wobei das Gehäuse des Sensormoduls (30) weiter umfasst:
eine Vorderfläche (198), die sich zwischen der rechten (194) und der linken (196) Seitenfläche des Gehäuses (170) erstreckt;
und wobei sich die untere Fläche (192) zwischen der rechten und der linken Seitenfläche erstreckt und sich von der Vorderfläche des Gehäuses (170) erstreckt;
wobei die mindestens eine Geht/Geht-nicht-Aussparung eine erste und eine zweite Geht/Geht-nicht-Aussparung (162, 164) umfasst, wobei zum Ineinanderrücken mit dem ersten bzw. dem zweiten Geht/Geht-nicht-Vorsprung (158, 160) die erste Geht/Geht-nicht-Aussparung (162) an einem Schnittpunk zwischen der ersten Seitenfläche (194) und der Vorderfläche (198) des Gehäuses (170) angeordnet ist, und die zweite Geht/Geht-nicht-Aussparung (164) an einem Schnittpunkt zwischen der linken Seitenfläche (196) und der Vorderfläche (198) des Gehäuses (170) angeordnet ist.

8. Anzeigeanordnung nach Anspruch 7, wobei das Gehäuse (170) weiter einen Verriegelungsvorsprung (142) umfasst, der sich von der unteren Fläche (192) des Gehäuses nach unten erstreckt, und der Kanal (48) weiter eine Vertiefung (138) umfasst, die in der unteren Fläche (130) des Kanals (48) gebildet ist, mit einer rückseitigen Verriegelungskante (140), die mit dem Verriegelungsvorsprung (142) ineinandergreift, wenn das Sensormodul (30) mit der ersten und der zweiten Geht/Geht-nicht-Aussparung (162, 164) in Einrückbeziehung mit dem ersten bzw. dem zweiten Geht/Gehtnicht-Vorsprung (158, 160) in der vollständig sitzenden Position in den Kanal (48) eingesetzt ist, um dadurch das Sensormodul (30) in einem Rasteingriff im Kanal (48) zu halten.

9. Anzeigeanordnung nach Anspruch 1, und weiter umfassend:
einen Schwenkzapfen (84), der an einer Bodenwand (66) der Basis (60) angeordnet ist und sich nach oben erstreckt und eine Drehachse (54) definiert;
eine Zeigeranordnung (52), welche beinhaltet:
eine Skalenplatte (62) mit Zeichen (105) darauf zum Anzeigen eines Flüssigkeitspegels;
einen Körper (86) mit einer axial in ihm gebildeten Mittelöffnung (94) zum Aufnehmen des Schwenkzapfens (84) so, dass der Körper (86) um die Drehachse (54) dreht, wobei der Körper einen mit den Zeichen (105) fluchtenden Zeiger (108) zum visuellen Anzeigen des Flüssigkeitspegelzustands aufweist;
ein erstes Paar diametral beabstandeter Naben (96, 98), die sich von einer unteren Fläche (80) des Körpers (86) nach unten erstrecken;
einen in jeder Nabe (96, 98) angeordneten angetriebenen Magneten (100);
wobei äußere Enden der Naben (96, 98) so verformt sind, dass sie die angetriebenen Magneten (100) an Ort und Stelle halten, wobei die angetriebenen Magneten magnetisch mit einem Antriebsmagneten (46) gekoppelt werden können, der mit einer Antriebswelle (42) einer Flüssigkeitspegel-Sendeeinheit (26) verknüpft ist, sodass der Körper bei Drehung der Antriebswelle (42) dreht, um in Reaktion auf eine Veränderung des Flüssigkeitspegelzustands des Tanks entsprechende Drehung des Zeigers (108) in Bezug auf die Skalenplatte (62) zu bewirken.

10. Anzeigeanordnung nach Anspruch 9, und weiter eine am Körper (86) angeordnete Halterung (110) umfassend zum Aufnehmen und Halten des Aktors (50) derart, dass der Aktor zusammen mit dem Körper um die Drehachse (54) dreht.

11. Anzeigeanordnung nach Anspruch 10, wobei der mindestens eine Sensor (58) einen ersten Sensor und einen zweiten Sensor, die etwa 90 Grad in Bezug zueinander ausgerichtet sind, zum Erkennen von Drehung des Aktors (50) um die Mittelachse (54) und Bestimmen des Flüssigkeitspegelzustands im Tank (12) umfasst.

## Revendications

1. Ensemble indicateur (10) pour déterminer un état de niveau de liquide à l'intérieur d'un réservoir (12), l'ensemble indicateur comprenant :
un ensemble cadran (28) apte à être relié au réservoir (12), l'ensemble cadran (28) incluant :
une base (60) ;
un couvercle (64) relié à la base (60), le couvercle ayant un canal (48) formé dans le couvercle (64) avec une surface de côté droit (132), une surface de côté gauche (134) espacée de la surface de côté droit (132), une surface avant (136) s'étendant entre les surfaces de côtés droit et gauche, et une paroi de fond (130) s'étendant entre les surfaces de côtés droit et gauche et depuis la surface avant (136) ; une direction axiale étant formée depuis la paroi de fond du canal (48) jusqu'à une paroi supérieure (124) du couvercle, ladite direction axiale étant parallèle à un axe central (44) de l'ensemble indicateur (10) ; un actionneur (50) situé entre la base (60) et le couvercle (64), l'actionneur (50) étant mobile en réponse à un changement de l'état de niveau de liquide dans le réservoir ; et l'ensemble indicateur comprenant en outre :
un module capteur (30) capable d'être déplacé à une position d'assise complète dans le couvercle (64) dans une direction de coulissement perpendiculaire à la direction axiale, le module capteur (30) incluant :
un boîtier (170) destiné à être inséré dans le canal (48), le boîtier ayant une surface supérieure (190), une surface inférieure (192) espacée de la surface supérieure (190), une première surface de côté droit (194) et une première surface de côté gauche (196) s'étendant entre la surface supérieure (190) et la surface inférieure (192) ; et
au moins un capteur (58) situé dans le boîtier destiné à déterminer un déplacement de l'actionneur depuis une position à une autre position en réponse à un changement de niveau de liquide à l'intérieur du réservoir ;
**caractérisé en ce que** le couvercle comprend au moins une saillie tout ou rien (158, 160) saillante dans le canal dans le couvercle (64) ; et **en ce que**
le module capteur est un module capteur autorisé et comprend au moins une cavité tout ou rien (162, 164) formée dans le boîtier (170), l'au moins une cavité tout ou rien (162, 164) étant façonnée pour empêcher toute interférence avec l'au moins une saillie tout ou rien (158, 160) saillante dans le canal (48), de sorte que le module capteur autorisé (30) puisse être déplacé à la position d'assise complète dans le couvercle (64) afin que l'au moins un capteur (58) soit aligné avec l'actionneur (50) pour générer des signaux relatifs à l'état de niveau de liquide ;
dans lequel au moins une saillie tout ou rien s'étend dans une direction axiale entre la paroi de fond du canal (48) et une paroi supérieure (124) du couvercle, et l'au moins une cavité tout ou rien (162, 164) s'étend dans une direction axiale entre une surface inférieure (192) et une surface supérieure (190) du boîtier ; et
dans lequel un module capteur non autorisé n'est pas capable d'être déplacé à la position d'assise complète dans le couvercle (64) en raison de l'absence de l'au moins une cavité tout ou rien (162, 164) dans le module capteur non autorisé amenant l'au moins une saillie tout ou rien (158, 160) à interférer avec un déplacement du module capteur non autorisé vers la position d'assise complète, ce qui empêche l'alignement du module capteur non autorisé avec l'au moins un capteur (58) et ce qui empêche ainsi le module capteur non autorisé d'envoyer des signaux incorrects relatifs à l'état de niveau de liquide.

2. Ensemble indicateur selon la revendication 1, dans lequel l'ensemble cadran comprend une paire de saillies tout ou rien (158, 160) espacées formées dans le canal (48) et le module capteur comprend une paire de cavités tout ou rien (162, 164) espacées coïncidant avec la paire de saillies tout ou rien (158, 160) espacées, chaque cavité tout ou rien ayant un dégagement suffisant autour de sa cavité tout ou rien respective pour permettre de ce fait au module capteur autorisé d'être déplacé à la position d'assise complète dans le couvercle (64).

3. Ensemble indicateur selon la revendication 2, dans lequel une unité d'envoi (26) apte à être insérée dans le réservoir (12) inclut une tête de montage (22) pouvant être reliée au réservoir (12), un flotteur (32) relié à une extrémité extérieure d'un bras pivot (34) et un engrenage (36) relié à une extrémité opposée du bras pivot pour s'engrener avec un engrenage droit (38) relié à une extrémité inférieure d'un arbre d'entraînement (42) s'étendant vers la tête de montage pour une rotation autour d'un axe central (44) de celui-ci lors d'un mouvement pivotant du bras pivot (34) en réponse à un changement de niveau de liquide dans le réservoir (12), et un aimant d'entraînement (46) est relié à une extrémité supérieure de l'arbre d'entraînement (42) pour une rotation autour de l'axe central (44), l'actionneur (50) étant couplé magnétiquement à l'aimant d'entraînement (46) pour provoquer de ce fait une rotation de l'actionneur (50) autour d'un axe central (44) en réponse à un changement de l'état de niveau de liquide dans le réservoir.

4. Ensemble indicateur selon la revendication 3, dans lequel l'au moins un capteur (58) comprend un premier capteur et un second capteur orientés à environ 90 degrés l'un par rapport à l'autre pour détecter une rotation de l'actionneur (50) autour de l'axe central et déterminer l'état de niveau de liquide à l'intérieur du réservoir.

5. Ensemble indicateur selon la revendication 4, dans lequel l'actionneur (50) comprend un aimant avec un axe nord-sud, dont une position axiale est détectée par les premier et second capteurs pour déterminer l'état de niveau de liquide à l'intérieur du réservoir.

6. Ensemble indicateur selon la revendication 4, dans lequel les premier et second capteurs comprennent des capteurs à effet Hall.

7. Ensemble indicateur selon la revendication 1, dans lequel l'au moins une saillie tout ou rien (158, 160) saillante dans le canal (48) comprend des première et seconde saillies tout ou rien, la première saillie tout ou rien (158) étant située à une intersection entre la surface de côté droit (132) et la surface avant (136), et la seconde saillie tout ou rien (160) étant située à une intersection entre la surface de côté gauche (134) et la surface avant (136), et
dans lequel le boîtier du module capteur (30) comprend en outre :
une surface avant (198) s'étendant entre la surface de côté droit (194) et la surface de côté gauche (196) du boîtier (170) ;
et dans lequel la surface inférieure (192) s'étend entre la surface de côté droit et la surface de côté gauche et s'étend depuis la surface avant du boîtier (170) ;
dans lequel l'au moins une cavité tout ou rien comprend des première et seconde cavités tout ou rien (162, 164), la première cavité tout ou rien (162) étant située à une intersection entre la surface de côté droit (194) et la surface avant (198) du boîtier (170), et la seconde cavité tout ou rien (164) étant située à une intersection entre la surface de côté gauche (196) et la surface avant (198) du boîtier (170) pour s'accoupler respectivement avec les première et seconde saillies tout ou rien (158, 160).

8. Ensemble indicateur selon la revendication 7, dans lequel le boîtier (170) comprend en outre une saillie de verrouillage (142) s'étendant vers le bas depuis la surface inférieure (192) du boîtier et le canal (48) comprend en outre un évidement (138) formé dans la surface inférieure (130) du canal (48) avec un bord de verrouillage vers l'arrière (140) qui s'engage avec la saillie de verrouillage (142) lorsque le module capteur (30) est inséré dans le canal (48) à la position d'assise complète avec les première et seconde cavités tout ou rien (162, 164) en relation d'accouplement respectivement avec les première et seconde saillies tout ou rien (158, 160), pour retenir de ce fait de manière amovible le module capteur (30) à l'intérieur du canal (48) par encliquetage.

9. Ensemble indicateur selon la revendication 1, comprenant en outre :
une broche pivot (84) située sur une paroi de fond (66) de la base (60) et s'étendant vers le haut et définissant un axe de rotation (54) ;
un ensemble pointeur (52) incluant :
une plaque graduée (62) avec des repères (105) sur celle-ci pour indiquer un niveau de liquide ;
un corps (86) avec une ouverture centrale (94) formée axialement à l'intérieur de celui-ci pour recevoir la broche pivot (84) de sorte que le corps (86) tourne autour de l'axe de rotation (54), le corps ayant un pointeur (108) aligné avec les repères (105) pour indiquer visuellement l'état de niveau de liquide ;
une première paire de bossages (96, 98) diamétralement espacés et s'étendant vers le bas depuis une surface inférieure (80) du corps (86) ;
un aimant entraîné (100) situé dans chaque bossage (96, 98) ;
dans lequel les extrémités extérieures des bossages (96, 98) sont déformées pour maintenir les aimants entraînés (100) en place, les aimants entraînés pouvant être couplés magnétiquement à un aimant d'entraînement (46) associé à un arbre d'entraînement (42) d'une unité d'envoi de niveau de liquide (26) de sorte que le corps tourne lors de la rotation de l'arbre d'entraînement (42) pour provoquer une rotation correspondante du pointeur (108) par rapport à la plaque graduée (62) en réponse à un changement de l'état de niveau de liquide du réservoir.

10. Ensemble indicateur selon la revendication 9, comprenant en outre un socle (110) situé sur le corps (86) pour recevoir et maintenir l'actionneur (50) de sorte que l'actionneur tourne autour de l'axe de rotation (54) avec le corps.

11. Ensemble indicateur selon la revendication 10, dans lequel l'au moins un capteur (58) comprend un premier capteur et un second capteur orientés à environ 90 degrés l'un par rapport à l'autre pour détecter une rotation de l'actionneur (50) autour de l'axe central (54) et déterminer l'état de niveau de liquide à l'intérieur du réservoir (12).
